(19) Europäisches Patentamt / European Patent Office / Office européen des brevets

(11) **EP 2 361 896 A1**

(12) **DEMANDE DE BREVET EUROPEEN**

(43) Date de publication:
**31.08.2011 Bulletin 2011/35**

(51) Int Cl.:
***C04B 33/24*** *(2006.01)*    ***C04B 38/08*** *(2006.01)*

(21) Numéro de dépôt: **11155636.1**

(22) Date de dépôt: **23.02.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **25.02.2010 FR 1051362**

(71) Demandeur: **Pillivuyt**
**18500 Mehun sur Yevre (FR)**

(72) Inventeur: **Amprimo, Christophe**
**18500 Mehun Sur Yevre (FR)**

(74) Mandataire: **Schmit, Christian Norbert Marie**
**Schmit-Chretien SNC**
**8 place du Ponceau**
**95031 Cergy Pontoise Cedex (FR)**

(54) **Composition céramique et produit céramique fabriqué à l'aide de cette composition**

(57)    L'invention se rapporte à une composition céramique pour la réalisation d'un produit céramique, ladite composition comprenant des microbilles de verres creuses, le volume desdites microbilles représentant entre 25% et 45% d'un volume total de matières sèches entrant dans la composition.

L'invention est particulièrement appropriée aux compositions céramiques de type porcelaine. Elle permet d'obtenir des porcelaines de faible densité, tout en conservant la résistance mécanique et la faible porosité d'une porcelaine traditionnelle.

## Description

*Domaine de l'invention*

La présente invention a pour objet une composition céramique. Le domaine de l'invention est celui des céramiques, plus particulièrement celui de la fabrication de pâtes pour la réalisation de produits en céramique. L'invention a également pour objet un produit en céramique obtenu à partir de ladite composition.

*Etat de la technique*

Aujourd'hui, il existe plusieurs catégories de produits céramiques, classifiés d'après la nature de la pâte cuite, selon qu'elle est tendre (poreuse) ou dure (imperméable).

La porosité correspond à un espace vide à l'intérieur et en surface du produit céramique. La porosité est dite ouverte lorsque les «vides» communiquent entre eux et avec l'extérieur par des canaux, ce qui permet la circulation des fluides.

Dans la catégorie des céramiques poreuses, il est connu la céramique de type terre cuite. Cette céramique est obtenue à partir d'un mélange de marnes et d'argiles, cuit à environ 700°C. Il est également connu la céramique de type faïence. Cette céramique est obtenue notamment à partir d'un mélange d'argile, de sable et de marne calcaire. Le principal avantage des céramiques poreuses est leur légèreté. Toutefois, les céramiques poreuses comportent un nombre important de pores ouverts.

Du fait de la communication avec l'extérieur, de tels pores ouverts constituent des sites d'accrochages pour des molécules organiques qui peuvent être problématiques, notamment dans des environnements exigeants en matière d'asepsie tels que les hôpitaux ou les restaurants. En outre, ces pores ouverts dégradent les propriétés mécaniques du matériau céramique, le rendant fragile et cassant.

Dans la catégorie des céramiques dures, il est connu la céramique de type grès. Cette céramique est obtenue à partir d'une terre argileuse, à forte teneur de silice. Cuite à de fortes températures, de l'ordre de 1200°C, la céramique de type grès présente une porosité ouverte résiduelle relativement faible qui la rend imperméable.

Dans cette catégorie, il est également connu la céramique de type vitrocéramique, et plus spécifiquement la porcelaine. Les vitrocéramiques sont typiquement obtenues à partir d'un mélange à base de kaolin, mêlé à du feldspath qui en augmente le liant et la transparence, ainsi qu'à de la silice très pure et/ou de l'alumine. Cuit à des températures d'environ 1300°C-1400°C, le matériau subit une vitrification, devient translucide et imperméable, aspects caractéristiques de la porcelaine.

Les avantages principaux des céramiques dures et particulièrement de la vitrocéramique sont leur résistance à la chaleur, comme aux attaques chimiques de tous ordres, leur faible perméabilité aux liquides, ainsi que leur solidité. Une assiette en porcelaine standard présente par exemple une résistance moyenne à la rupture en flexion d'environ 60 MPa.

Toutefois, l'inconvénient principal des céramiques dures est leur densité en plus de leur coût élevé par rapport aux céramiques dites poreuses. En effet, la masse volumique apparente du grès et de la porcelaine varie d'environ 2,3 à 2,8 g/cm$^3$. Par conséquent, les produits en grès ou en porcelaine sont relativement lourds et difficiles à manipuler.

A ce jour, la plupart des tentatives pour réduire la densité des céramiques dures reposent sur des modes d'augmentation du nombre de pores. Or, ces derniers deviennent communicants dès lors que leur proportion volumique atteint un seuil dit « de percolation », généralement peu éloigné de 10%. Le taux d'absorption d'eau de la céramique dépasse alors largement le seuil qui est admis pour la porcelaine. Par exemple en France, (décret n°78-141 du 8 février 1978 portant application, en ce qui concerne le commerce de la porcelaine, de la loi du 1er août 1905 modifiée sur la répression des fraudes), le seuil de poids d'eau absorbé, admis pour la porcelaine, est de 0,5% du poids de la céramique. La mesure du taux correspondant au poids d'eau absorbé peut être effectuée selon la méthode A décrite dans la norme NF EN 1217 de mars 1998 « Matériaux et objets en contact avec les denrées alimentaires - Méthodes d'essai pour l'absorption d'eau par les objets en céramique ». Ce taux mesuré correspond à la porosité ouverte de la céramique.

Il existe de ce fait un besoin d'un produit en céramique, de la catégorie des céramiques dures, ayant une densité réduite et une porosité ouverte quasi nulle.

Afin d'alléger une céramique de type porcelaine, il est connu d'introduire dans la pâte céramique des microbilles de verre creuses. Ces microbilles restent plus ou moins intègres lors des différentes étapes de réalisation du produit céramique, ce qui conduit, après cuisson, à un produit céramique comportant de nombreuses porosités sphériques occluses, c'est-à-dire sans ouverture au niveau des parties désémaillées. On obtient un tesson présentant une porosité ouverte quasiment nulle.

Par exemple, le document JP4114975 décrit la préparation d'une composition de porcelaine comprenant moins de 45% en masse de microbilles de verre. Cependant, la résistance à la rupture en flexion obtenue est de 360 kg/cm$^2$, ce qui est très inférieur aux valeurs d'une porcelaine standard.

Le document WO96/27569 décrit la préparation d'une porcelaine comprenant 5% en masse de microbilles de verre. Selon ce document, les billes utilisées peuvent avoir une densité variant entre 0,01 et 0,6 g/cm$^3$.

Or, les études de la Demanderesse l'ont amenée à constater que les meilleurs résultats, en termes de compromis entre l'allègement de la céramique et la conservation de sa résistance mécanique, dépendent de la fraction volumique de billes de verre et non de la fraction massique. En effet, l'élément déterminant est le volume de « vides » introduit dans la composition céramique.

La présente invention se rapporte donc à une composition céramique pour la réalisation d'un produit céramique, ladite composition comprenant des microbilles de verres creuses, le volume desdites microbilles représentant entre 25% et 45% d'un volume total de matières sèches entrant dans la composition.

La composition de la céramique qui accueille les microbilles de verre creuses peut être de type porcelaine traditionnelle, porcelaine alumineuse, porcelaine vitrifiée, grès, vitrocéramique, faïence, etc.

L'invention est particulièrement intéressante pour les céramiques dures, particulièrement de type porcelaine. A partir d'une composition selon l'invention, on peut en effet obtenir un produit céramique de basse densité, nettement inférieure à 2,3 g/cm$^3$. L'aspect du produit est semblable à celui d'une porcelaine traditionnelle, présentant une porosité ouverte faible et des performances mécaniques analogues à celles d'une porcelaine traditionnelle.

L'invention permet en particulier de fabriquer industriellement des produits de porcelaine à usage culinaire ou alimentaire.

Selon une forme préférentielle de l'invention, la composition est donc de type vitrocéramique, plus particulièrement de type porcelaine. Elle comprend alors des minéraux plastifiants, notamment choisis parmi les kaolins et argiles ; elle comprend également des minéraux fondants notamment choisis parmi les feldspaths, la syénite et la leucite. Elle comprend également des minéraux dégraissants, tels que la silice, l'alumine et/ou le zircon. L'alumine est préférée, car elle permet d'augmenter la résistance de la céramique par rapport à la silice.

Selon une forme préférentielle de l'invention, la composition comprend en outre des particules organiques porogènes, telles que de l'amidon. De telles particules se dégradent à la cuisson et créent des vides à l'intérieur de la céramique. L'adjonction d'une faible quantité d'amidon permet d'alléger la composition céramique sans ajouter trop de billes, ce qui diminue les coûts de production. En effet, les microbilles de verre sont nettement plus coûteuses que l'amidon.

Cependant, afin de ne pas atteindre le seuil de percolation et de conserver un poids d'eau absorbée inférieur à 0,5% dans les produits céramiques, l'ajout d'une matière organique tel qu'un amidon doit rester inférieur à environ 10% en volume par rapport au volume total de matières sèches de la composition.

L'invention se rapporte également à un produit céramique obtenu à partir d'une composition céramique selon l'invention. Selon une forme préférentielle de l'invention, il s'agit d'un produit en vitrocéramique, plus particulièrement d'un produit en porcelaine.

Les différentes vitrocéramiques se distinguent par le type de cristallisation qui se produit au cours de la cuisson à haute température. Le contrôle de cette cristallisation donne les propriétés spécifiques de la vitrocéramique. Dans une porcelaine, il s'agit d'une cristallisation de type mullitique (mullite : $3Al_2O_3.2SiO_2$)- Une vitrocéramique telle qu'employée pour des plaques de cuisson subit une cristallisation de type cordiéritique (cordiérite : $2Al_2O_3.2MgO.5SiO_2$).

L'invention se rapporte également à un procédé de fabrication d'une composition selon l'invention, ledit procédé comprenant une étape de mélange de microbilles de verre creuses avec des poudres minérales et de l'eau.

Les microbilles de verres creuses disponibles dans le commerce peuvent comporter des traces de substances solubles néfastes à la réalisation de la pâte céramique et aux caractéristiques de la céramique. Un procédé de fabrication d'une composition selon l'invention comprend donc avantageusement une étape de traitement des billes, notamment par lavage à l'eau ou à l'aide d'une solution aqueuse acide.

Cette étape peut être préalable au mélange avec les autres matières entrant dans la composition. Le lavage des billes peut également être effectué lors d'une étape de filtre-pressage de la pâte céramique obtenue par adjonction d'un excès d'eau.

*Brève description des dessins*

L'invention sera mieux comprise à la lecture de la description qui suit et à l'examen des figures qui l'accompagnent. Celles-ci sont présentées à titre indicatif et nullement limitatif de l'invention.

La figure 1 représente un agrandissement microscopique d'une porcelaine obtenue selon un mode de réalisation de l'invention.
La figure 2 représente un agrandissement microscopique d'une porcelaine traditionnelle.

*Description détaillée de modes de réalisation de l'invention*

La présente invention a pour but d'obtenir une composition céramique de faible densité, permettant cependant de fabriquer des produits céramiques notamment adaptés à une utilisation alimentaire. Comme indiqué précédemment, les produits céramiques alimentaires doivent présenter une résistance mécanique et une capacité d'absorption d'eau comparable à celles de la porcelaine traditionnelle.

Pour ce faire, l'invention met en oeuvre une composition céramique comportant un matériau d'allègement efficient, stable et fiable, en l'espèce des microbilles de verre creuses.

Les microbilles de verre creuses se présentent sous forme d'une poudre dont les particules sont globalement non poreuses et sphériques. Actuellement, les produits commercialisés sont constitués d'un verre de borosilicate de soude et de chaux. Cependant il serait possible d'employer des billes creuses dont la paroi serait constituée d'un autre type de verre, voire de particules minérales cristallisées.

Selon les recherches de la Demanderesse, les propriétés mécaniques requises pour la composition céramique sont obtenues avec un volume de billes représentant de 25% à 45%, plus préférentiellement de 25% à 35%, du volume total de matières sèches entrant dans la composition de pâte céramique. Ce volume total inclut le volume des billes.

Par « volume », on entend, non pas le volume apparent d'une poudre - qui contient de l'air - mais le volume réel de matière solide. Ce volume est estimé en divisant la masse de matière première par une valeur de densité communiquée par le fabricant.

En-deçà de 25% de billes, l'allègement obtenu est peu significatif. Au-delà de 45%, l'affaiblissement de la résistance mécanique devient excessif, en raison de la proportion de vides dans la céramique. Par ailleurs, un apport important de matière vitreuse abaisse le point de ramollissement de la pâte. Cette dernière résiste alors moins bien aux températures élevées de cuisson.

Les microbilles de verre présentent un diamètre qui peut être compris entre 1 et 140 microns et une densité sensiblement comprise entre 0,10 et 0,60 g/cm$^3$.

La densité des microbilles peut varier d'un facteur 1 à 6. Une même masse de billes peut donc correspondre à des volumes très différents, et donc à des propriétés très différentes de la pâte céramique.

Lors de la cuisson de la composition céramique, selon les techniques habituelles d'obtention d'un produit céramique, les microbilles de verre se lient à la matrice céramique et forment des porosités sphériques fermées. Une porosité est dite fermée lorsque les vides ne communiquent pas avec l'extérieur par des canaux.

Il est établi que, dans le cas des matériaux fragiles, lors de la rupture d'une éprouvette qui serait contrainte par exemple en flexion, la fissuration se propage à partir d'un défaut tel qu'une porosité. Ce défaut, dit « défaut critique », agit comme un concentrateur de contrainte dans son voisinage. La théorie de la mécanique des matériaux fragiles établit une relation mathématique entre la résistance à la rupture $\sigma_R$, la ténacité $K_{Ic}$ et la forme et la taille du défaut critique. Si l'on considère qu'un pore de forme sphérique, de diamètre **2a** petit devant les dimensions de l'échantillon, constitue le défaut critique, dans un mode de sollicitation en traction, cette relation s'écrit :

$$\sigma_R = \frac{K_{Ic}}{\sqrt{\pi a}}$$

Cette relation montre bien que plus la porosité est petite et plus la résistance est grande.

Lors des expérimentations, il est apparu que pour une céramique qui aurait une résistance par exemple d'environ $\sigma_R$ = 120 MPa et une ténacité d'environ $K_{Ic}$ = 1.5 MPa.m$^{-1/2}$, dans le cas d'une porosité sphérique, la taille du défaut critique obtenue par calcul serait donc d'environ 100 $\mu$m. Ainsi, si l'on souhaite minimiser l'affaiblissement dû à l'apport de billes creuses dans une telle céramique, le diamètre maximal des billes ne devrait pas excéder sensiblement 100 $\mu$m.

Afin de démontrer les avantages de l'invention, on considère une composition de pâte céramique de l'état de la technique. Il s'agit par exemple d'une composition de type porcelaine alumineuse, composée principalement d'environ 10% d'argile, 50% de kaolin, 20% de feldspath et 20% d'alumine. Ces pourcentages sont exprimés en masse par rapport à la masse totale de matières sèches.

Après mélange à de l'eau, façonnage et cuisson à 1350 °C, on obtient un produit céramique, par exemple une assiette, qui présente une densité d'environ 2,7 g/cm$^3$ et une résistance à la rupture en flexion d'approximativement 120 MPa.

L'absorption d'eau par la porosité ouverte du produit obtenu avec cette pâte de porcelaine est quasi nulle, inférieur à 0,1 %.

Pour réduire la densité de la porcelaine obtenue, un mode de réalisation de l'invention prévoit d'ajouter à cette pâte des microbilles de verre creuses.

Par exemple, à 2,6 kg d'un mélange kaolin/feldspath/alumine/argile (d'une densité moyenne de 2,9 g/cm$^3$) sous forme de poudre sèche, on ajoute 120 g de billes de verre, d'un diamètre moyen de 100 $\mu$m et d'une densité de 0,25 g/cm$^3$.

Le rapport (volume de billes)/(volume total de matières sèches) est d'environ 35%. A ce mélange, on ajoute 3,7 L d'eau pour obtenir une composition céramique sous forme de pâte.

Après façonnage et cuisson à 1350 °C, on obtient un produit céramique, par exemple une assiette, qui présente une densité d'environ 2,0 g/cm$^3$ et une résistance à la rupture à la flexion d'approximativement 90 MPa.

Cette céramique obtenue est ainsi non poreuse (avec un taux inférieur à 0,5% de porosité), résistante aux chocs thermiques et mécaniques, et apte à l'émaillage. Par ailleurs, l'allègement obtenu par rapport à la pâte céramique sans billes est supérieur à 25%.

On obtient ainsi une céramique pouvant être utilisée avec une sécurité supérieure en usage alimentaire et d'aspect identique à une porcelaine traditionnelle.

Le produit céramique obtenu respecte notamment l'ensemble des critères définis pour les porcelaines par le décret français n°78-141 du 8 février 1978, à savoir notamment :

- porosité ouverte sur tesson émaillé ou désémaillé <0,5%,
- translucidité sur une épaisseur de 3 à 4 mm,
- composition minéralogique comprenant une phase vitreuse ainsi que du quartz et de la mullite,

**-** densité inférieure à 2,3 g/cm³.

Dans un deuxième mode de réalisation de l'invention, on considère une composition de pâte céramique de l'état de la technique, composée principalement d'environ 50% d'un mélange kaolin/argile, 25% de feldspath et 25% de silice. Ces pourcentages sont exprimés en masse par rapport à la masse totale de matières sèches.

Après mélange à de l'eau, façonnage et cuisson à 1350 °C, on obtient un produit céramique, par exemple une assiette, qui présente une densité d'environ 2,3 g/cm³ et une résistance à la rupture en flexion d'approximativement 60 MPa. L'absorption d'eau par la porosité ouverte du produit obtenu avec cette pâte de porcelaine est inférieure à 0,1 %.

Pour réduire la densité de la porcelaine obtenue, un deuxième mode de réalisation de l'invention prévoit d'ajouter à cette pâte des microbilles de verre creuses. Par exemple, on ajoute au mélange kaolin/feldspath/silice/argile des billes de verre, d'un diamètre moyen de 100 µm et d'une densité de 0,25 g/cm³. Le rapport (volume de billes)/(volume total de matières sèches) est d'environ 30%. A ce mélange, on ajoute de l'eau pour obtenir une composition céramique sous forme de pâte.

Après façonnage et cuisson à 1350 °C, on obtient un produit céramique, par exemple une assiette, qui présente une densité d'environ 1,9 g/cm³ et une résistance à la rupture à la flexion d'approximativement 50 MPa.

Dans un troisième mode de réalisation, la composition de base est la même que dans le premier mode de réalisation. Elle contient notamment 10% d'argile, 50% de kaolin, 20% de feldspath et 20% d'alumine, en masse par rapport à la masse totale de matières sèches.

Dans ce mode de réalisation, l'allègement est obtenu par une addition mixte de microbilles de verre creuses et de particules organiques porogènes de faible diamètre, telles que de l'amidon. Dans ce cas, l'ajout d'amidon permet d'augmenter l'allègement tout en limitant l'apport de microbilles de verre, donc en évitant d'apporter trop de matière vitreuse.

Par exemple, à 2,7 kg d'un mélange kaolin/feldspath/alumine/argile (d'une densité moyenne de 2,9 g/cm³) sous forme de poudre sèche, on ajoute 150 g d'amidon (densité : 1,5 g/cm³) et 140 g de billes de verre, d'un diamètre moyen de 100 um et d'une densité de 0,25 g/cm³. Le rapport (volume de billes)/(volume total de matières sèches) est d'environ 35%. A ce mélange, on ajoute de l'eau pour obtenir une composition céramique sous forme de pâte.

Après façonnage et cuisson à 1350 °C, on obtient un produit céramique, par exemple une assiette, qui présente une densité d'environ 1,7 g/cm³ et une résistance à la rupture à la flexion d'approximativement 80 MPa.

Dans un quatrième mode de réalisation de l'invention, on considère une composition de pâte vitrocéramique de l'état de la technique, composée principalement d'environ 55% de silice, 35% d'alumine, 5% de magnésie, les 5% restants étant constitués de plusieurs autres oxydes, notamment d'oxyde de potassium. Ces pourcentages sont exprimés en masse par rapport à la masse totale de matières sèches.

Après mélange à de l'eau, façonnage et cuisson à 1380 °C, on obtient un produit vitrocéramique, par exemple un plat, qui présente une densité d'environ 2,4 g/cm³ et une résistance à la rupture en flexion d'approximativement 150 MPa.

A 1 kg d'une telle composition (d'une densité moyenne de 2,6 g/cm³) sous forme de poudre sèche, on ajoute 50 g de billes de verre, d'un diamètre moyen de 100 um et d'une densité de 0,25 g/cm³. Le rapport (volume de billes)/(volume total de matières sèches) est d'environ 35%. A ce mélange, on ajoute de l'eau pour obtenir une composition céramique sous forme de pâte.

Après façonnage et cuisson à 1380 °C, on obtient un produit vitrocéramique, par exemple un plat, qui présente une densité d'environ 1,9 g/cm³.

Une composition céramique selon l'invention est obtenue par des procédés courants des industries des céramiques traditionnelles. On peut notamment préparer une pâte de coulage, par malaxage des matières sèches avec un excès d'eau. On peut également préparer une pâte plastique, obtenue par filtre-pressage du mélange malaxé. On peut également préparer une poudre de pressage obtenue par atomisation.

Les billes sont incorporées durant la préparation de la pâte. Les billes utilisées sont capables de supporter des pressions de 30 bars mises en jeu dans les procédés de coulage sous pression, voire de 300 bars pour le pressage isostatique de poudres atomisées.

Les produits céramiques obtenus à partir des compositions céramiques selon l'invention peuvent également être fabriqués selon des techniques connues, par exemple au niveau :

**-** de la mise en forme (coulage en moule plâtre ou coulage sous pression, calibrage, estampage, pressage isostatique),
**-** de l'émaillage (trempage ou pistolet),
**-** et de la cuisson (mono-cuisson ou bi-cuisson dégourdi-émail).

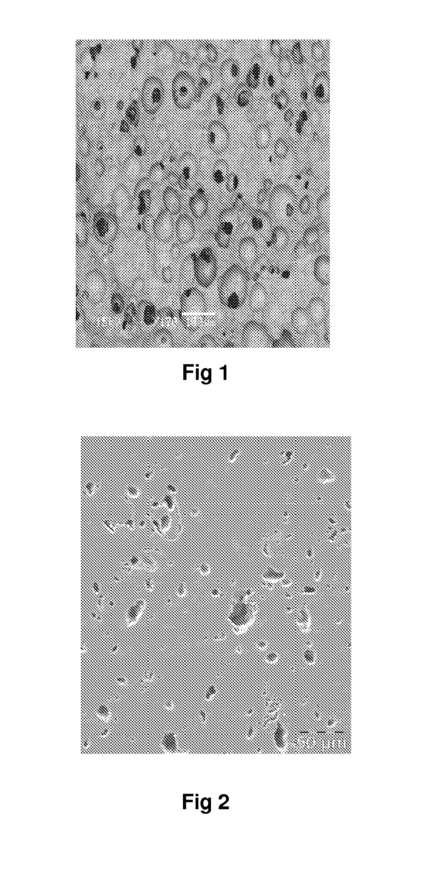

La figure 1 montre un exemple d'un agrandissement microscopique d'une porcelaine obtenue selon un mode de réalisation de l'invention. Comme les microbilles restent plus ou moins intègres lors des différentes étapes de réalisation de la porcelaine allégée, ceci conduit, après cuisson, à une porcelaine comportant de nombreuses porosités sphériques occluses, c'est-à-dire sans ouverture au niveau des parties désémaillées. On obtient un tesson présentant une porosité ouverte quasiment nulle.

Ainsi, comme dans l'exemple de la figure 2 qui montre un agrandissement microscopique d'une porcelaine traditionnelle, le taux de pores communicants de la porcelaine allégée est très faible.

Lors de la réalisation de l'invention, il est apparu que les microbilles de verres creuses comportent des substances solubles qui peuvent être néfastes à la réalisation de la pâte céramique et aux caractéristiques de la céramique.

En effet, actuellement les procédés de fabrication des billes de verre creuses conduisent à des produits dont le verre comporte des traces de sels solubles, notamment à base de bore ou de calcium. Lorsque ces billes sont placées dans une suspension aqueuse telle qu'une pâte de porcelaine, ces sels se solubilisent et peuvent engendrer divers problèmes tels qu'une augmentation du pH et un phénomène de floculation. Il en découle d'une part des difficultés de mise en oeuvre liées à une forte augmentation de la viscosité et de la thixotropie de la pâte (gélification), et d'autre part une dégradation plus ou moins marquée de l'aspect de la céramique après cuisson (piqures d'émail, bullage de la pâte, coloration orange).

Il est possible d'appliquer aux billes des posttraitements de type lavage à l'eau ou à l'acide afin de stabiliser le verre des billes, pour éviter ces phénomènes de relargage de composants solubles dans la pâte céramique allégée.

Ainsi dans un mode de réalisation préféré, les billes utilisées sont des billes ayant subi un traitement en surface de stabilisation du verre qui permettent de les débarrasser des substances solubles dans l'eau.

Certains fabricants fournissent des billes de verres creuses ayant déjà subi un tel traitement, mais le coût de ces dernières est nettement plus élevé que celui des billes non traitées.

Le traitement peut être effectué lors de la réalisation de la pâte céramique allégée. Dans ce cas, on réalise une pâte céramique dans laquelle des billes non traitées sont incorporées. L'évacuation de la majeure partie des substances solubles peut être effectuée par le biais d'une opération de filtre-pressage de la pâte. Le filtre-pressage est une opération consistant à presser une pâte liquide réalisée avec un excès d'eau, par exemple 1 kg de matières sèches pour 1 litre d'eau. Le pressage se fait au travers de toiles de filtration, à une pression en général supérieure à environ 10 bars. Ainsi, on évacue la majeure partie de l'eau et on obtient une pâte plastique. Ce procédé est couramment employé pour la réalisation de pâtes de calibrage ou encore dans le traitement des boues de stations de traitement des eaux usées.

L'efficacité de ce procédé peut être améliorée par l'ajout, dans la pâte, d'agents de drainage ou défloculants. La pâte ainsi filtrée-pressée peut ensuite être utilisée telle quelle pour l'extrusion d'une pâte de calibrage, ou bien être stockée pour être ultérieurement délayée dans l'eau de manière à réaliser une pâte de coulage, ou une pâte pressage obtenue par atomisation.

La céramique obtenue selon l'invention présente l'avantage d'être moins lourde que la porcelaine traditionnelle. On peut ainsi réduire les problèmes de fatigue et troubles musculo-squelettiques que peuvent rencontrer des personnels de la restauration. Ces derniers sont souvent amenés à manipuler des assiettes en céramique dure de très grande dimension.

Par exemple, à vide, une assiette ronde en porcelaine traditionnelle de 31 cm de diamètre et 5 mm d'épaisseur présente une masse de 1,2 kg. Un plat à four de 35 cm de long, 50 cm de large et 10 cm de hauteur peut atteindre une masse supérieure à 4 kg. Des gains de densité de 25 à 30% permettent par exemple de diminuer les masses des assiettes de 300 à 360 g, et de diminuer les masses des plats à four de 1 kg à 1,2 kg.

La céramique obtenue selon l'invention présente également une inertie thermique et une conductivité thermique réduites ; autrement dit, elle présente une amélioration de ses performances en réchauffage (vitesse, homogénéité) et en conservation de la chaleur.

La composition de la pâte céramique telle qu'elle vient d'être décrite trouve une application dans la fabrication de céramique destinée à la réalisation d'articles de table ou d'articles culinaires, mais aussi de carreaux, d'articles sanitaires ou d'articles techniques pour des applications industrielles. La liste n'est bien entendu pas exhaustive.

## Revendications

1. - Composition céramique pour la réalisation d'un produit céramique, ladite composition comprenant des microbilles de verres creuses, le volume desdites microbilles représentant entre 25% et 45% d'un volume total de matières sèches entrant dans la composition.

2. - Composition selon la revendication 1, **caractérisée en ce que** le volume des microbilles représente entre 25% et 35% d'un volume total de matières sèches entrant dans la composition.

3. - Composition selon la revendication 1 ou la revendication 2, **caractérisée en ce que** le diamètre desdites microbilles est inférieur ou égal à 100 $\mu$m.

4. - Composition selon l'une des revendications précédentes, comprenant des minéraux plastifiants, des minéraux fondants et des minéraux dégraissants.

5. - Composition selon la revendication 4, telle que les minéraux plastifiants sont choisis parmi les kaolins et argiles, les minéraux fondants sont choisis parmi les feldspaths, la syénite et la leucite, les minéraux dégraissants sont choisis parmi la silice, l'alumine et le zircon.

6. - Composition selon l'une des revendications précédentes, comprenant en outre des particules organiques porogènes, dans une proportion inférieure ou égale à 10% en volume par rapport au volume total de matières sèches de la composition.

7. - Composition selon la revendication 6, telle que les particules organiques porogènes sont des particules d'amidon.

8. - Procédé de fabrication d'une composition selon l'une des revendications précédentes, comprenant une étape de mélange de microbilles de verre creuses avec des poudres minérales et de l'eau.

9. - Procédé selon la revendication précédente, comprenant ensuite une étape de filtre-pressage permettant d'éliminer un excès d'eau.

10. - Procédé selon l'une des revendications 9 à 10, comprenant au préalable une étape de traitement en surface des billes, de sorte à les débarrasser de substances solubles dans l'eau.

11. - Produit en céramique obtenu à partir d'une composition selon l'une des revendications 1 à 7.

12. - Produit en céramique obtenu à partir d'une composition préparée par un procédé selon l'une des revendications 8 à 10.

13. - Produit selon l'une des revendications 11 ou 12, tel qu'il s'agit d'un produit en vitrocéramique.

14. - Produit selon l'une des revendications 11 à 13, tel qu'il s'agit d'un produit en porcelaine.

**Fig 1**

**Fig 2**

Europäisches
Patentamt

European
Patent Office

Office européen
des brevets

**RAPPORT DE RECHERCHE EUROPEENNE**

Numéro de la demande

EP 11 15 5636

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 96/27569 A1 (ILLY FRANCESCO [CH]; MOCK ELMAR [CH]; HELL MATTHIAS [CH]) 12 septembre 1996 (1996-09-12) * page 3, dernier alinéa - page 4, alinéa 1 * * page 5, alinéa 1 - alinéa 3; revendications * | 1-14 | INV. C04B33/24 C04B38/08 |
| X | CHEMICAL ABSTRACTS, vol. 117, no. 12, 21 septembre 1992 (1992-09-21), Columbus, Ohio, US; abstract no.: 117120q, "Manufacture of porcelain ware with low weight and high strength", page 346, XP373839 * abrégé * & JP 4 114975 A (TOKAI KOUGIYOU KK) 15 avril 1992 (1992-04-15) | 1-5,8, 11,12,14 | |
| X | TAI WEON-PIL ET AL: "Fabrication of new porcelain bodies in the system of glass microspheres-quartz-aluminous cement", NIPPON SERAMIKKUSU KYOKAI GAKUJUTSU RONBUNSHI/JOURNAL OF THE CERAMIC SOCIETY OF JAPAN 1999 JAN CERAMIC SOC OF JAPAN, vol. 107, no. 1241, janvier 1999 (1999-01) , pages 8-14, XP002639046, * alinéas [02.1], [03.1], [03.3]; figures 9,10; tableau 3 * | 1,3,8, 11,12,14 | DOMAINES TECHNIQUES RECHERCHES (IPC) C04B |
| X | EP 1 502 641 A1 (ASAHI GLASS CO LTD [JP]) 2 février 2005 (2005-02-02) * alinéa [0018]; revendications; tableau 1 * | 1,3,11 | |

-/--

Le présent rapport a été établi pour toutes les revendications

| Lieu de la recherche | Date d'achèvement de la recherche | Examinateur |
|---|---|---|
| La Haye | 26 mai 2011 | Theodoridou, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

# RAPPORT DE RECHERCHE EUROPEENNE

Numéro de la demande

EP 11 15 5636

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | GB 576 318 A (GARCO PRODUCTS INC) 28 mars 1946 (1946-03-28) * page 1, ligne 22 - ligne 52 * * page 2, ligne 57 - ligne 103 * ----- | 8-10 | |
| A | FR 911 568 A (GLACERIES DE LA SAMBRE) 12 juillet 1946 (1946-07-12) * page 1, ligne 19 - page 2, ligne 36 * ----- | 8-10 | |
| A | US 2006/057846 A1 (ISHIKAWA HIDEMI [JP] ET AL) 16 mars 2006 (2006-03-16) * alinéa [0052] - alinéa [0053] * ----- | 8,9 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| La Haye | 26 mai 2011 | Theodoridou, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**            EP 11 15 5636

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-05-2011

| Document brevet cité au rapport de recherche | | Date de publication | Membre(s) de la famille de brevet(s) | | Date de publication |
|---|---|---|---|---|---|
| WO 9627569 | A1 | 12-09-1996 | AU | 4782396 A | 23-09-1996 |
| EP 1502641 | A1 | 02-02-2005 | AT | 373513 T | 15-10-2007 |
| | | | CN | 1576261 A | 09-02-2005 |
| | | | DE | 602004008999 T2 | 12-06-2008 |
| | | | US | 2006192325 A1 | 31-08-2006 |
| | | | US | 2005043166 A1 | 24-02-2005 |
| GB 576318 | A | 28-03-1946 | AUCUN | | |
| FR 911568 | A | 12-07-1946 | AUCUN | | |
| US 2006057846 | A1 | 16-03-2006 | AU | 2003266659 A1 | 19-04-2004 |
| | | | CN | 1684922 A | 19-10-2005 |
| | | | WO | 2004028995 A1 | 08-04-2004 |
| | | | JP | 4556235 B2 | 06-10-2010 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- JP 4114975 B
- WO 9627569 A
- FR 78141